# EUROPEAN PATENT APPLICATION

(11) **EP 4 404 131 A1**
(43) Date of publication of application: **24.07.2024**
(21) Application number: 22869711.6
(22) Date of filing: 02.08.2022
(51) Int. Cl.: G06Q 50/10

(54) **DATA MANAGEMENT DEVICE, DATA SHARING SYSTEM AND METHOD, AND DATA MANAGEMENT PROGRAM**

(30) Priority: 16.09.2021 JP 2021150921
(71) Applicant: NTT Communications Corporation, Tokyo 100-8019 (JP)
(72) Inventor: TAKADA, Tomonori, Tokyo 100-8019 (JP); KISHIDA, Tsunechika, Tokyo 100-8019 (JP); AKABORI, Hideaki, Tokyo 100-8019 (JP)
(74) Representative: Nederlandsch Octrooibureau
(86) International application number: PCT/JP2022/029696
(87) International publication number: WO 2023/042563

(57) **Abstract**

An aspect of a data management device includes a controller configured to process data to be shared to create processed data based on setting information transmitted from a first user terminal and related to publication of the data which is to be shared and which is stored in a dedicated storage area of the first user, to publish the created processed data; to cause the first user terminal and the second user terminal to have a chat with each other in response to a request for sharing the data to be shared, which is original data of the processed data, the request for sharing being transmitted from the second user terminal; and to create a shared storage area accessible only by the first user and the second user in a case where a sharing agreement is acquired between the first user and the second user, save a copy of the data which is to be shared in the shared storage area, and permit the second user terminal to access the shared storage area.

## Description

### FIELD

Embodiments of the present invention relate to a data management device, a data sharing system and method, and a data management program.

### BACKGROUND

Several devices for sharing data among a plurality of user terminals have been proposed.

For example, Patent Literature 1 discloses a device in which the same user data is stored in a plurality of user terminals, and when user data is updated in a user terminal of a certain user (updater), the user data is also updated in user terminals of other users.

Further, Patent Literature 2 discloses a technique in which a symbolic link to user data stored in a user area of one user is stored in a user area of another user to virtually store the user data in the user area of the other user, thereby enabling a viewing/editing operation similar to a case where actual data is stored.

### CITATION LIST

### PATENT LITERATURE

Patent Literature 1: Jpn. Pat. Appln. KOKAI Publication No. 2012-168630
Patent Literature 2: Jpn. Pat. Appln. KOKAI Publication No. 2019-200643

### SUMMARY

### TECHNICAL PROBLEM

In a case of sharing data, first, it is possible to acquire a sharing agreement between a user who is an owner of the data (hereinafter referred to as a data owner) and a user who uses the data (hereinafter referred to as a data user) by telephone, email, or the like.

However, this is effective only in a case where the data user knows of the existence of data and the contact information of the owner of the data. It is very difficult for an unspecified number of data users to find desired data and request the owner of the data to share the data.

The present invention has been made in view of the above circumstances, and an object of the present invention is to make it possible for data users to find desired data and share the data.

### SOLUTION TO PROBLEM

To solve the problems described above, according to one aspect of the present invention, a data management device configured to manage data sharing between a first user who is an owner of data and a second user who uses the data includes: a communication interface configured to communicate with a first user terminal operated by the first user and a second user terminal operated by the second user; and a controller configured to control the data management device. The controller includes a data processing unit, a chat management processing unit, and a share processing unit. The data processing unit is configured to process data to be shared to create processed data based on setting information transmitted from the first user terminal and related to publication of the data which is to be shared and which is stored in a dedicated storage area accessible only by the first user, and to publish the created processed data. The chat management processing unit causes the first user terminal and the second user terminal to have a chat with each other in response to a request for sharing the data to be shared, which is original data of the processed data, the request for sharing being transmitted from the second user terminal. The share processing unit is configured to create a shared storage area accessible only by the first user and the second user in a case where a sharing agreement is acquired between the first user and the second user, to save a copy of the data which is to be shared and which is stored in the dedicated storage area of the first user or a symbolic link to the to be shared in the shared storage area, and to permit the second user terminal to access the shared storage area.

According to one aspect of the present invention, a data sharing system includes a storage including a dedicated storage area and a shared area, and a data management device according to the present invention.

According to one aspect of the present invention, a data sharing method for sharing data between a first user who is an owner of the data and a second user who uses the data, includes, by a computer, processing data to be shared to create processed data based on setting information transmitted from a first user terminal operated by the first user and related to publication of the data which is to be shared and which is stored in a dedicated storage area accessible only by the first user, and publishing the created processed data; causing the first user terminal and a second user terminal operated by the second user to have a chat with each other in response to a request for sharing the data to be shared, which is original data of the processed data, the request for sharing being transmitted from the second user terminal; and creating a shared storage area accessible only by the first user and the second user in a case where a sharing agreement is acquired between the first user and the second user, saving a copy of the data which is to be shared and which is stored in the dedicated storage area of the first user or a symbolic link to the data to be shared in the shared storage area, and permitting the second user terminal to access the shared storage area.

One aspect of a data management program according to the present invention is a program for causing a computer to execute processing by each processing unit included in one aspect of the data management device according to the present invention.

### ADVANTAGEOUS EFFECTS OF INVENTION

According to each aspect of the present invention, data users can easily find desired data and share the data.

### BRIEF DESCRIPTION OF THE DRAWINGS

FIG. 1 is a diagram showing an example of an overall configuration of a data sharing system according to a first embodiment of the present invention.
FIG. 2 is a block diagram showing an example of a hardware configuration of a data management device according to the first embodiment of the present invention.
FIG. 3 is a block diagram showing a software configuration of the data management device according to the first embodiment.
FIG. 4 is a flowchart showing an example of an overall processing procedure of shared area management processing performed by the data management device according to the first embodiment.
FIG. 5 is a flowchart showing an example of a processing procedure of publication setting processing in the overall processing procedure shown in FIG. 4.
FIG. 6 is a flowchart showing an example of a processing procedure of chat processing in the overall processing procedure shown in FIG. 4.
FIG. 7 is a flowchart showing an example of a processing procedure of shared area creation processing of the overall processing procedure shown in FIG. 4.
FIG. 8 is a flowchart showing an example of a processing procedure of shared area deletion processing of the overall processing procedure shown in FIG. 4.
FIG. 9 is a flowchart showing an example of a processing procedure of data deletion processing in the overall processing procedure shown in FIG. 4.
FIG. 10 is a block diagram showing an example of a software configuration of a data management device according to a second embodiment of the present invention.
FIG. 11 is a flowchart showing an example of an overall processing procedure of shared area management processing performed by the data management device according to the second embodiment.
FIG. 12 is a flowchart showing an example of a processing procedure of chat processing in the overall processing procedure shown in FIG. 11.

### DETAILED DESCRIPTION

Embodiments of the present invention will be described below with reference to the drawings.

### <First Embodiment>

### (Configuration Example)

### (1) System

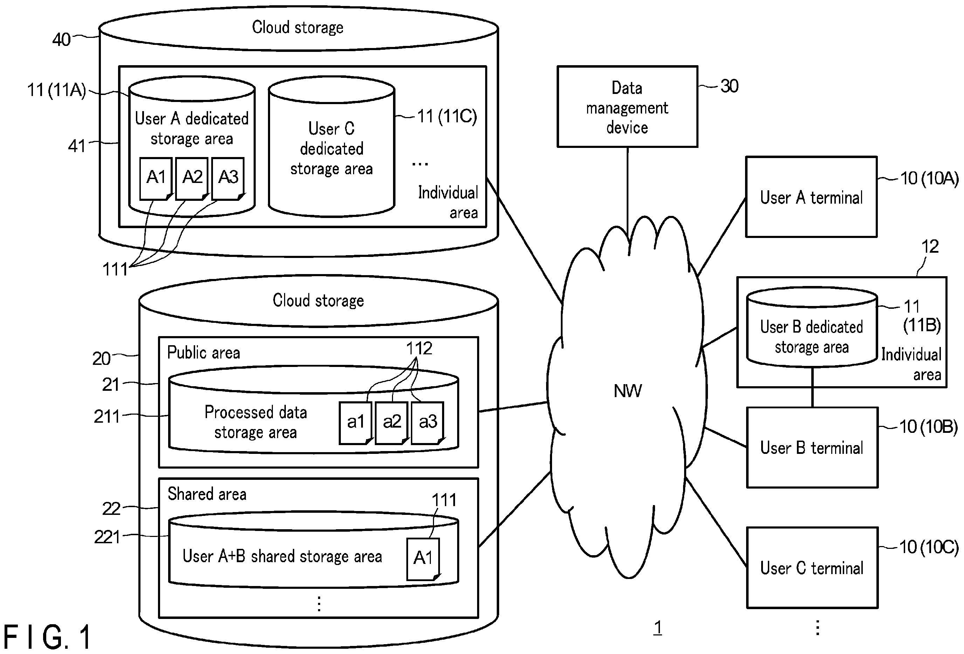

FIG. 1 is a diagram showing an overall configuration of a data sharing system according to a first embodiment of the present invention. The data sharing system 1 provides data sharing among a plurality of users.

The data sharing system 1 includes, for example, a user A terminal 10A, a user B terminal 10B, a user C terminal 10C, etc., a cloud storage 20, a data management device 30 according to the first embodiment of the present invention, and a cloud storage 40. If the user A terminal 10A, the user B terminal 10B, the user C terminal 10C, etc. are not particularly distinguished from each other, they are simply referred to as a user terminal 10. The user terminal 10, the cloud storage 20, the data management device 30, and the cloud storage 40 are connected to one another via a network NW.

User terminals 10, each being a personal computer (PC) used by a registered user who is registered as a user of the data sharing system 1, are disposed in, for example, different companies. FIG. 1 shows one user terminal 10 for one company, but each company may have a plurality of user terminals 10, for example, a plurality of user A terminals 10A. That is, each of the user A terminal 10A, the user B terminal 10B, the user C terminal 10C, etc. may be one terminal or a terminal group including a plurality of terminals.

In addition, the data sharing system 1 may be formed as a system in one company. In this case, each user terminal 10 can be located in each branch office in one company, or can be located in a separate department in one company.

The data sharing system 1 includes, for each user terminal 10, a dedicated storage area isolated from the other user terminals 10. That is, the data sharing system 1 includes a user A dedicated storage area 11A dedicated to the user A terminal 10A, a user B dedicated storage area 11B dedicated to the user B terminal 10B, a user C dedicated storage area 11C dedicated to the user C terminal 10C, etc., each of which stores at least one data file. The dedicated storage area of each user terminal 10 may be provided in a cloud storage or may be provided in an in-house server or the like corresponding to the user terminal 10. In the example of FIG. 1, the user A dedicated storage area 11A, the user C dedicated storage area 11C, etc. are provided in an individual area 41 of a cloud storage 40, and the user B dedicated storage area 11B is provided in an individual area 12 of a user B server (not shown). Here, the individual areas 12 and 41 are storage areas dedicated to the respective user terminals 10 that are connected to the network NW and isolated from the other user terminals 10. The individual area 12 is connected to the user B terminal 10B via an in-house local area network (LAN) or the like. If the user A dedicated storage area 11A, the user B dedicated storage area 11B, the user C dedicated storage area 11C, etc. are not particularly distinguished from each other, they are simply referred to as a user dedicated storage area 11.

The cloud storage 20 is a first storage device including a public area 21 and a shared area 22.

The public area 21 is a storage area that is accessible from any user terminals 10 of registered users without limitation of the user terminals 10. The public area 21 includes a processed data storage area 211 for storing processed data 112. The processed data 112 is data obtained by processing the data file 111 stored in the user dedicated storage area 11. The processing includes, but is not limited to, abstraction (generalization) such as reduction of the number of significant digits of data, anonymization such as deletion of personal information or data generation source information, and the like.

The shared area 22 includes a plurality of user shared storage areas 221. The user shared storage area 221 is a storage area for storing shared data to be shared among the plurality of user terminals 10. For example, one of the user shared storage areas 221 is a user A+B shared storage area shared between the user A terminal 10A that is the data owner and the user B terminal 10B that is the data user. Each user shared storage area 221 is an area that can be accessed only by a specific user who is a subject of sharing. For example, the user A+B shared storage area can be accessed by the user A terminals 10A and the user B terminal 10B, but cannot be accessed by the user C terminal 10C, and even its existence is concealed from the user terminals 10 of users other than the user A and the user B. Each of these user shared storage areas 221 is created for each piece of shared data. Thus, for example, areas shared by the user A terminal 10A with the user B terminal 10B may include a plurality of user shared storage areas 221.

The shared data is obtained by copying the data file 111 to be shared from the user dedicated storage area 11 of the data owner. As described above, the processed data obtained by processing the data file 111 is stored in the processed data storage area 211, and the actual data of the data file 111 is stored in the user shared storage area 221.

Here, the individual area 41 is formed in the cloud storage 40, which is a second storage device physically different from the cloud storage 20, which is the first storage device including the shared area 22. However, the individual area 41 may be, by being logically separated, formed in the cloud storage 20 in which the shared area 22 is formed. Also, the individual area 12 may be formed in the individual area 41 of the cloud storage 40, or may be formed in the cloud storage 20 by being logically separated.

In response to a publication setting request from any one of the user terminals 10, the data management device 30 processes the data file 111 which is a publication target to create processed data 112, and stores it in the processed data storage area 211. In addition, in response to a data share negotiation request for the original data from any one of the user terminals 10 that has viewed the processed data 112, the data management device 30 provides a chat between the user terminal 10 of the request source and the user terminal 10 of the owner of the data file 111 which is the original data. Furthermore, in response to a share request from any one of the user terminals 10, the data management device 30 creates the user shared storage area 221 shared by the user terminal 10 of the data owner and the user terminal 10 of the data user in the shared area 22 of the cloud storage 20, and stores the data file 111 to be shared therein.

### (2) Data Management Device 30

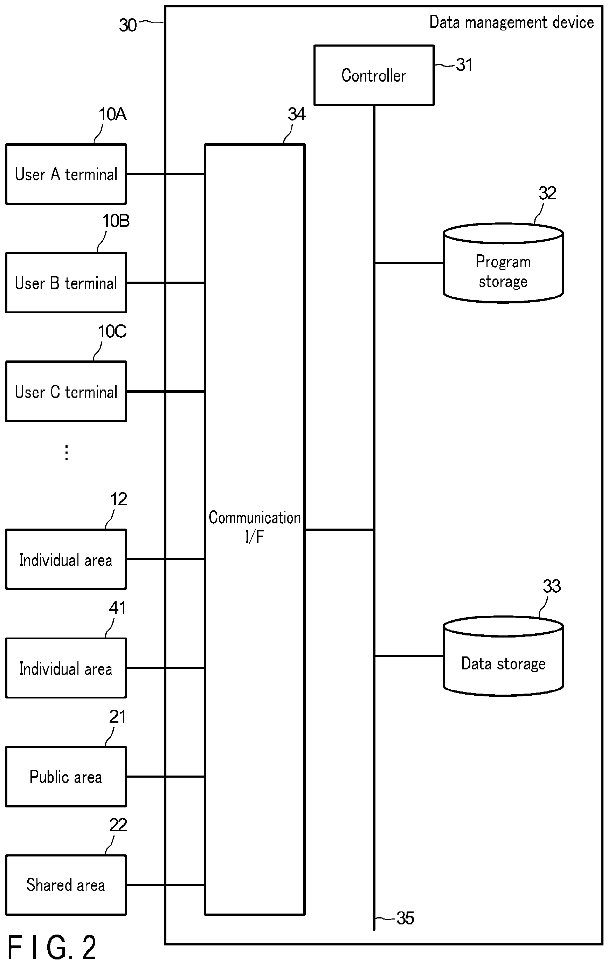

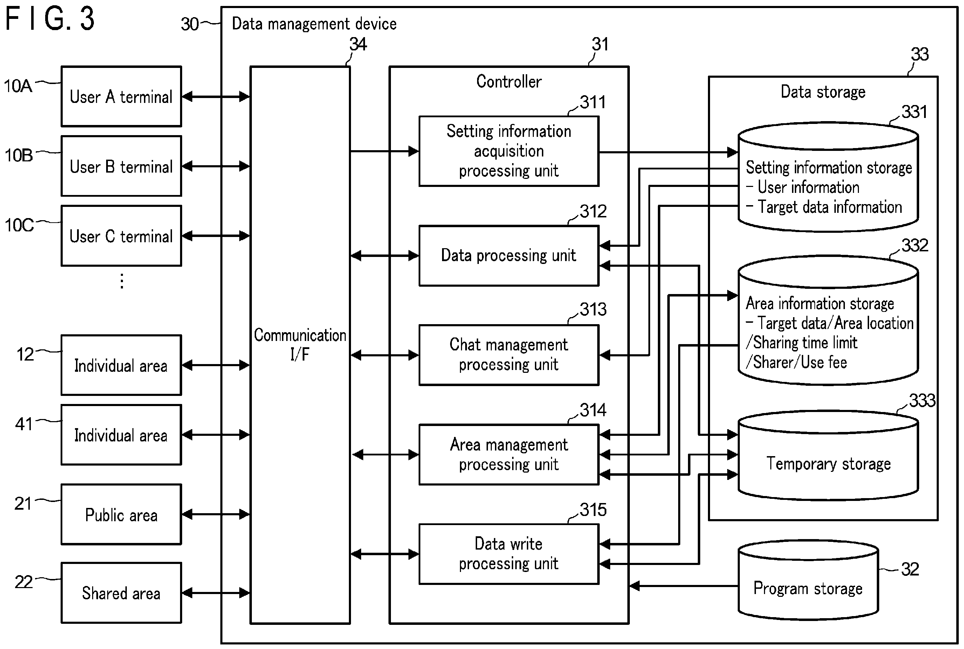

FIGS. 2 and 3 are block diagrams showing examples of a hardware configuration and a software configuration of the data management device 30, respectively.

The data management device 30 includes a controller 31 including a hardware processor such as a central processing unit (CPU). The data management device 30 is connected to the controller 31, via a bus 35, to a storage unit including a program storage 32 and a data storage 33, and to a communication interface (hereinafter, abbreviated as communication I/F) 34.

The communication I/F 34 performs transmission of various data among the user terminals 10, the individual areas 12 and 41, the public area 21, and the shared area 22, using a communication protocol defined by the network NW under the control of the controller 31.

The program storage 32 is formed by combining, as a storage medium, for example, a nonvolatile memory which can be written to and read from whenever required, such as a hard disk drive (HDD) or a solid state drive (SSD), and a nonvolatile memory such as a read only memory (ROM). The program storage 32 stores middleware such as an operating system (OS), and in addition, programs necessary for executing various control processes according to the first embodiment of the present invention.

The data storage 33 is formed by combining, as a storage medium, for example, a nonvolatile memory which can be written to and read from whenever required, such as an HDD or an SSD, and a volatile memory such as a random access memory (RAM). This data storage 33 includes a setting information storage 331, an area information storage 332, and a temporary storage 333 as storage units necessary for implementing the first embodiment of the present invention.

The setting information storage 331 is used to store user information about each registered user who uses the data management device 30 and target data information about each data file 111 designated as a publication target from among the data files 111 stored in the user dedicated storage area 11 of the individual areas 12 and 41.

The user information includes at least a user ID, contact information, and a settlement method. The user ID is identification information for uniquely identifying a registered user. Here, the registered user is, for example, a contract user who uses the data sharing system 1 including the data management device 30 with payment of a predetermined use fee, and who can be a user of the user terminal 10. The user ID is a number, a character string recognizable by a person, or a combination of a character string and a number, which is assigned by the data management device 30 at the time of user registration. The user ID may be a name that is designated discretionarily by the user and does not overlap with any other registered users. The contact information may be, for example, an email address for sending an invitation mail to a chat room. The settlement method is settlement information such as an account for settlement or a card number for payment of a use fee or the like of the data sharing system 1 or receiving a data use fee or the like from another user. Further, the user information may include authentication information such as a password for authentication or the like. The user information may also include personal information such as a company name, a department, an address, a name, and a telephone number, and the like.

The target data information includes at least a data ID, a user ID, a processing method, and a publication period. The data ID is identification information for uniquely identifying the data file 111 designated as a publication target by the user from among the data files 111 stored in each user dedicated storage area 11. The data ID may be a file name of a data file 111, or may be a number, a character string recognizable by a person, or a combination of a character string and a number, which is assigned by the data management device 30 when the data file 111 is stored in the individual area 12 or 41. The user ID is identification information for specifying the user who is the owner of the data file 111, and corresponds to the user ID in the user information. The processing method is information for specifying a processing method of the data file 111 used when the processed data 112 is created from the data file 111. The publication period is information for specifying a period during which the processed data 112 created from the data file 111 is stored and published in the processed data storage area 211 of the public area 21. The processing method and the publication period can be set by the owner of the original data file 111. The processed data ID is identification information for uniquely identifying the processed data 112 stored in the processed data storage area 211 of the public area 21. The target data information may further include a processed data ID. The processed data ID is a number, a character string recognizable by a person, or a combination of a character string and a number assigned by the data management device 30 when the processed data 112 is stored in the processed data storage area 211. Further, by making the processed data ID the same as the data ID, the target data information may not include the processed data ID.

The area information storage 332 is used to store area information related to each of the plurality of user shared storage areas 221 between the user terminals 10 created in the shared area 22 of the cloud storage 20. The area information related to the user shared storage area 221 includes at least target data, an area location, a sharing time limit, a sharer, and a use fee. The target data is identification information for specifying the data file 111 that is stored in the user dedicated storage area 11 and is to be shared data stored in the corresponding user shared storage area 221. The target data corresponds to the data ID in the target data information in the setting information storage 331. The area location is address information for specifying a storage location of the user shared storage area 221 to access the user shared storage area 221 via the network NW. This may include an IP address of the cloud storage 20, a physical/logical location such as a drive letter or a folder name of an HDD or an SSD, etc. The sharing time limit is information indicating a period during which the data file 111, which is shared data, is shared by the user shared storage area 221. The sharer includes user IDs for specifying a data owner and a data user who are sharers of the corresponding user shared storage area 221. The use fee is information indicating the amount of money that the data user pays to the data owner.

The temporary storage 333 is used to temporarily store various data and information generated during processing by the controller 31.

The controller 31 includes, as processing functions according to the first embodiment of the present invention, a setting information acquisition processing unit 311, a data processing unit 312, a chat management processing unit 313, an area management processing unit 314, and a data write processing unit 315. These processing units 311 to 315 are realized by, for example, causing the hardware processor of the controller 31 to execute respective programs stored in the program storage 32.

The setting information acquisition processing unit 311 performs a process of receiving, via the communication I/F 34, an instruction for setting user information or target data information transmitted from each user terminal 10 via the network NW. The setting information acquisition processing unit 311 further performs a process of storing the user or target data information included in the received instruction for setting in the setting information storage 331.

Based on the target data information stored in the setting information storage 331, the data processing unit 312 processes the data file 111 which is the publication target stored in each user dedicated storage area 11 to create processed data. The data processing unit 312 further stores the created processed data as the processed data 112 in the public area 21 via the network NW using the communication I/F 34 to perform a process of publishing the processed data to the registered users of the data sharing system 1.

The chat management processing unit 313 receives, via the communication I/F 34, a share negotiation request transmitted via the network NW from the user terminal 10 of the user who has viewed the processed data 112 in the public area 21 and desired to use the original data. Further, in response to the reception of the share negotiation request, the chat management processing unit 313 performs a process of creating a chat room for chatting between the user who is the data user and the user who is the data owner owning the data file 111, based on the target data information and the user information stored in the setting information storage 331. The chat management processing unit 313 performs a process of transmitting an invitation to the chat room to the contact corresponding to the user ID of the data owner via the network NW using the communication I/F 34. Then, the chat management processing unit 313 performs a process of controlling a chat performed between the user terminal 10 of the data owner and the user terminal 10 of the data user in the chat room.

The area management processing unit 314 performs a process of receiving, via the communication I/F 34, a share request transmitted from the user terminal 10 of the data owner via the network NW if the sharing agreement is acquired through the chat. The area management processing unit 314 further performs a process of transmitting an instruction for creating the user shared storage area 221 to the cloud storage 20 via the network NW using the communication I/F 34 in response to the share request. As a result, the user shared storage area 221 among the plurality of user terminals 10 is created in the shared area 22 of the cloud storage 20. Further, the area management processing unit 314 performs a process of storing the area information related to the created user shared storage area 221 in the area information storage 332.

The data write processing unit 315 reads the data file 111 of data to be shared from the user dedicated storage area 11 of the data owner via the network NW using the communication I/F 34 based on the area information about the user shared storage area 221 stored in the area information storage 332. The data write processing unit 315 performs a process of storing the read data file 111 in the temporary storage 333. The data write processing unit 315 further performs a process of writing the data file 111 stored in the temporary storage 333 to the corresponding user shared storage area 221 via the network NW using the communication I/F 34.

### (Operation Example)

Next, an operation of the data sharing system 1 having the above configuration will be described.

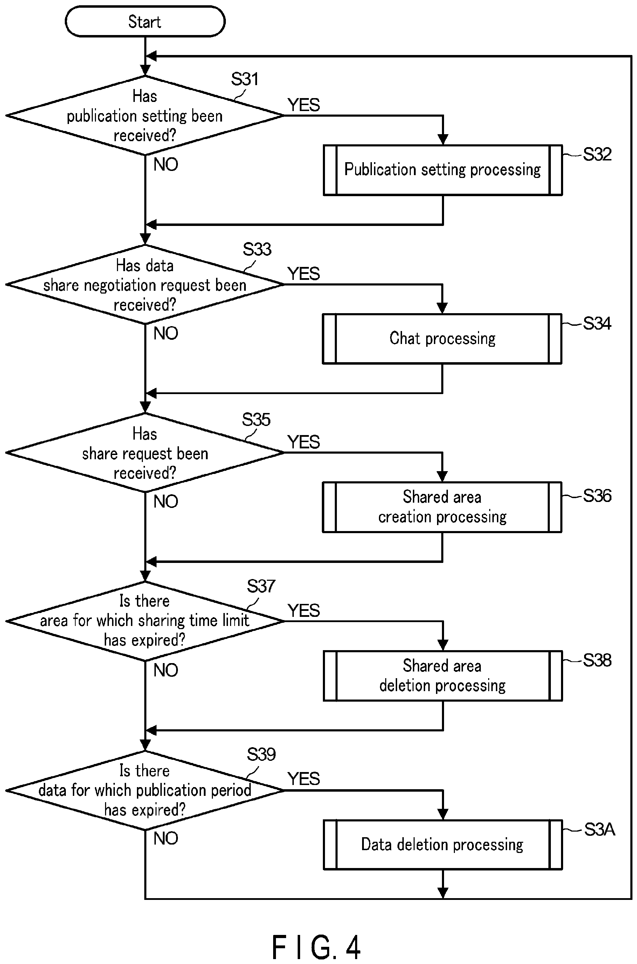

A user registration operation, an authentication operation when using the data sharing system 1, a file operating operation such as saving or reading a data file in or from the corresponding user dedicated storage area 11, and the like from each user terminal 10 are known, and thus description thereof will be omitted. Hereinafter, a processing operation of the data management device 30 related to the sharing of the shared data among the plurality of user terminals 10 will be described with reference to flowcharts shown in FIGS. 4 to 9.

First, an overall processing procedure of the data management device 30 will be described. FIG. 4 is a flowchart showing an example of an overall processing procedure of shared area management processing performed by this data management device 30.

In step S31, under the control of the setting information acquisition processing unit 311, the controller 31 of the data management device 30 determines whether or not a publication setting instruction transmitted from any one of the user terminals 10 and transferred via the network NW is received via the communication I/F 34. The user who is the data owner can perform authentication from the user terminal 10, select the publication setting of the own data file 111 on a menu screen after the authentication, and perform the settings related to publication on a setting screen to which the process proceeds according to the selection. Although not particularly illustrated, the controller 31 may have a function of a Web server that provides the user terminal 10 with an authentication screen, a menu screen, and a setting screen, as a Web browser screen. Then, a publication setting instruction for target data transmitted from the user terminal 10 in response to a predetermined transmission operation on the setting screen of the Web browser. If it is determined that the publication setting instruction has been received, the controller 31 determines YES in step S31 and proceeds to a processing operation in step S32. If it is determined that the publication setting instruction has not been received, the controller 31 determines NO in step S31 and proceeds to a processing operation in step S33.

In step S32, the controller 31 performs publication setting processing under the control of the setting information acquisition processing unit 311 and the data processing unit 312. This publication setting processing is a processing operation of acquiring target data information about the data file 111 which is a publication target transmitted from the user terminal 10 of the data owner, processing the data file 111 based on the target data information, and storing the processed data 112 in the processed data storage area 211 of the public area 21. The publication setting processing will be described in detail later. Thereafter, the controller 31 proceeds to the processing operation of step S33.

In step S33, under the control of the chat management processing unit 313, the controller 31 determines whether or not a data share negotiation request transmitted from any of the user terminals 10 via the network NW has been received via the communication I/F 34. The registered user of the data sharing system 1 performs authentication from the user terminal 10, and can view the processed data 112 stored in the processed data storage area 211 of the public area 21, for example, on a browsing screen advanced as a result of selection of viewing of the published data from a menu screen after authentication. Then, the user who desires to use the original data of the viewed processed data 112 designates the processed data 112 on the browsing screen and performs a share negotiation operation, so that a data share negotiation request is transmitted from the user terminal 10. If it is determined that the data share negotiation request has been received, the controller 31 determines YES in step S33, and proceeds to the processing operation of step S34. If it is determined that the data share negotiation request has not been received, the controller 31 determines NO in step S33 and proceeds to the processing operation of step S35.

In step S34, the controller 31 executes chat processing under the control of the chat management processing unit 313. The chat processing is a processing operation of causing a chat to be performed between the user terminal 10 of the user who has transmitted the data share negotiation request and the user terminal 10 of the owner of the data file 111 which is the original data of the designated processed data 112. Details of the chat processing will be described later. Thereafter, the controller 31 proceeds to the processing operation of step S35.

In step S35, under the control of the area management processing unit 314, the controller 31 determines whether or not a share request transmitted from any of the user terminals 10 and transmitted via the network NW has been received via the communication I/F 34. The data owner who has agreed to share the data file 111 in the chat performs a predetermined share request operation on the user terminal 10, so that the share request is transmitted from the user terminal 10. If it is determined that the share request has been received, the controller 31 determines YES in step S35 and proceeds to the processing operation of step S36. If it is determined that the share request has not been received, the controller 31 determines NO in step S35 and proceeds to the processing operation of step S37.

In step S36, the controller 31 performs shared area creation processing under the control of the area management processing unit 314 and the data write processing unit 315. This shared area creation processing is a processing operation of creating the user shared storage area 211 in the shared area 22 and storing shared data. Details of the shared area creation processing will be described later. Thereafter, the controller 31 proceeds to the processing operation of step S37.

In step S37, under the control of the area management processing unit 314, the controller 31 determines whether or not there is a user shared storage area 221 for which a sharing time limit has expired. That is, for each piece of area information related to the user shared storage areas 221 stored in the area information storage 332, the controller 31 checks the sharing time limit, which is information included in the area information and indicating a period during which the data file 111 of shared data is shared by the user shared storage area 221. If it is determined that there is a user shared storage area 221 for which the sharing time limit has expired, the controller 31 determines YES in step S37 and proceeds to the processing operation of step S38. If it is determined that there is no user shared storage area 221 for which the sharing time limit has expired, the controller 31 determines NO in step S37 and proceeds to the processing operation of step S39.

In step S38, the controller 31 performs shared area deletion processing under the control of the area management processing unit 314. The shared area deletion processing is a processing operation for deleting the user shared storage area 211, for which the sharing time limit has expired. Details of the shared area deletion processing will be described later. Thereafter, the controller 31 proceeds to the processing operation of step S39.

In step S39, under the control of the area management processing unit 314, the controller 31 determines whether or not there is any processed data 112 for which the publication period has expired. That is, the controller 31 checks the publication period included in the target data information for each piece of the target data information stored in the setting information storage 331. If it is determined that there is processed data 112 for which the publication period has expired, the controller 31 determines YES in step S39 and proceeds to the processing operation of step S3A. If it is determined that there is no processed data 112 for which the publication period has expired, the controller 31 determines NO in step S39 and proceeds to the processing operation of step S31.

In step S3A, the controller 31 performs data deletion processing under the control of the area management processing unit 314. This data deletion processing is a processing operation for deleting the processed data 112 for which the publication period has expired from the processed data storage area 211 of the public area 21. Details of the data deletion processing will be described later. Thereafter, the controller 31 proceeds to the processing operation of step S31.

### (1) Publication setting processing

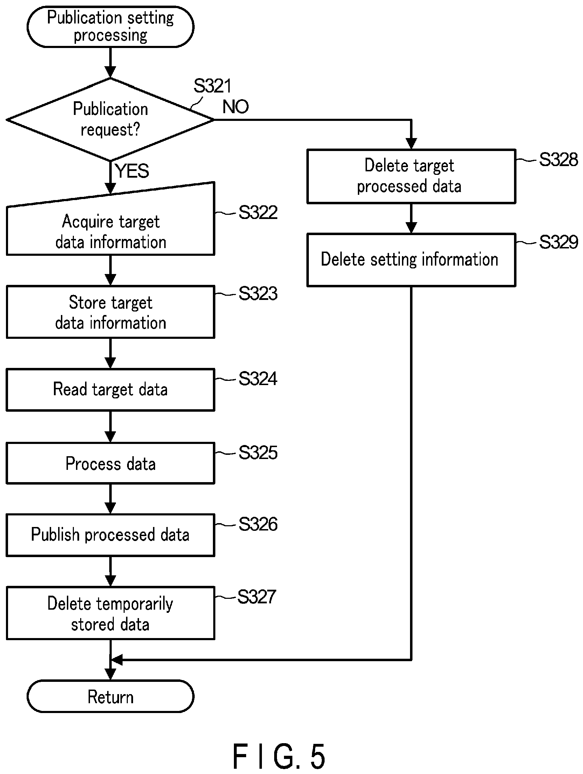

FIG. 5 is a flowchart showing an example of a processing procedure of the publication setting processing in the above step S32 that is performed by the controller 31 of the data management device 30.

First, in step S321, the controller 31 determines whether or not the publication setting received from the user terminal 10 is a publication request under the control of the setting information acquisition processing unit 311. The publication setting includes a publication request for requesting a start of publication and a publication termination request for requesting a termination of the publication. If it is determined that the request is a publication request, the controller 31 determines YES in step S321 and proceeds to the processing operation of step S322. If it is determined that the request is not a publication request, that is, the request is a publication termination request, the controller 31 determines NO in step S321 and proceeds to the processing operation of step S328.

In step S322, the controller 31 acquires the target data information transmitted from the user terminal 10 via the network NW via the communication I/F 34 under the control of the setting information acquisition processing unit 311.

In step S323, the controller 31 stores the acquired target data information in the setting information storage 331 under the control of the setting information acquisition processing unit 311.

Next, in step S324, under the control of the data processing unit 312, the controller 31 reads out the data file 111, which is the target data stored in the user dedicated storage area 11, via the network NW using the communication I/F 34 based on the target data information stored in the setting information storage 331. The read data file 111 is stored in the temporary storage 333.

In step S325, under the control of the data processing unit 312, the controller 31 further processes the data file 111 stored in the temporary storage 333 based on the processing method in the target data information stored in the setting information storage 331 to create the processed data.

In step S326, under the control of the data processing unit 312, the controller 31 stores the created processed data as the processed data 112 in the processed data storage area 211 of the public area 21 via the network NW using the communication I/F 34. Thus, the processed data 112 is published to the registered users. At this time, the controller 31 may add a processed data ID for specifying the processed data 112 to the target data information stored in the setting information storage 331.

Thereafter, in step S327, under the control of the data processing unit 312, the controller 31 deletes the temporarily stored information stored in the temporary storage 333 in each processing operation in the publication setting processing in step S32. Then, the controller 31 ends the processing operation of the publication setting processing and proceeds to the processing operation of step S33.

If it is determined in step S321 that the received publication setting is not a publication request but a publication termination request, the controller 31 proceeds to the processing operation in step S328 as described above. In step S328, under the control of the setting information acquisition processing unit 311, the controller 31 deletes the corresponding processed data 112 from the processed data storage area 211 of the public area 21 based on the target data information stored in the setting information storage 331 corresponding to the designated data file 111.

Further, in step S329, under the control of the setting information acquisition processing unit 311, the controller 31 deletes the target data information corresponding to the designated data file 111 from the setting information storage 331. Thereafter, the controller 31 ends the processing operation of the publication setting processing and proceeds to the processing operation of step S33.

### (2) Chat Processing

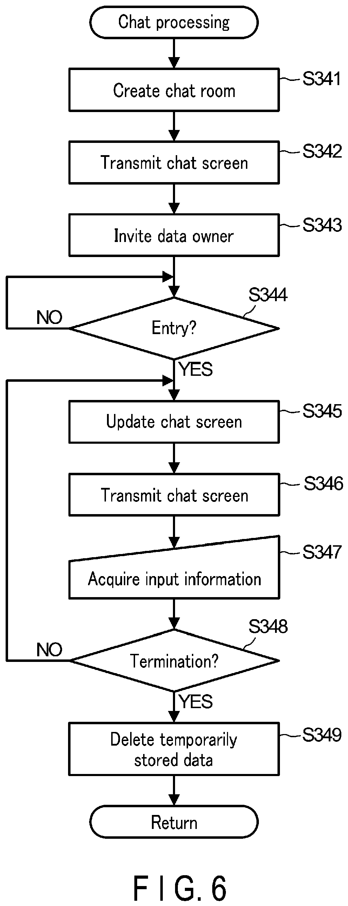

FIG. 6 is a flowchart showing an example of a processing procedure of the chat processing in the above step S34 that is performed by the controller 31 of the data management device 30. The controller 31 executes the following processing operations under the control of the chat management processing unit 313.

First, in step S341, the controller 31 creates a chat room and stores information related to the chat room in the temporary storage 333. For example, the controller 31 reads out, from the setting information storage 331, the target data information of the processed data 112 for which the share negotiation request has been received and the user information about the owner of the target data file 111 which is the original data of the processed data 112, and stores them in the temporary storage 333. Further, an area for holding chat contents is secured in the temporary storage 333.

Next, in step S342, the controller 31 transmits a chat screen to be superimposed on the browsing screen or to be switched from the browsing screen to the user terminal 10 of the share negotiation request source via the network NW using the communication I/F 34.

Then, in step S343, the controller 31 transmits an invitation to the chat room to the contact of the user who is the data owner via the network NW using the communication I/F 34 based on the user information stored in the temporary storage 333.

Thereafter, in step S344, the controller 31 determines whether or not an instruction to enter the corresponding chat room has been received from the user terminal 10 of the data owner using the communication I/F 34. If it is determined that the entry instruction has not been received, the controller 31 determines NO in step S344 and repeats the processing operation of step S344. If it is determined that the entry instruction has been received, the controller 31 determines YES in step S344 and proceeds to the processing operation of step S345.

In step S345, the controller 31 updates the chat screen so as to indicate that the data owner has entered the room.

Then, in step S346, the controller 31 transmits the updated chat screen to the user terminal 10 of the share negotiation request source and the user terminal 10 of the data owner via the network NW using the communication I/F 34.

Thereafter, in step S347, the controller 31 acquires, via the communication I/F 34, the input information input on the chat screen and transmitted from the user terminal 10 of the share negotiation request source or the data owner via the network NW. The controller 31 stores the acquired input information in the temporary storage 333.

In step S348, the controller 31 determines whether or not the input information is termination. If it is determined that the input information is not termination, the controller 31 determines NO in step S348, and proceeds to the processing operation of step S345. If it is determined that the input information is termination, the controller 31 determines YES in step S348 and proceeds to the processing operation in step S349. By repeating the processing operations from step S345 to step S348 in this way, negotiation of the sharing agreement for the data file 111 is performed between the data owner and the user who desires to use the data in the chat room.

In step S349, the controller 31 deletes the temporarily stored information stored in the temporary storage 333 in each processing operation in the chat processing in step S34. Then, the controller 31 ends the chat processing operation and proceeds to the processing operation of step S35.

### (3) Shared Area Creation Processing

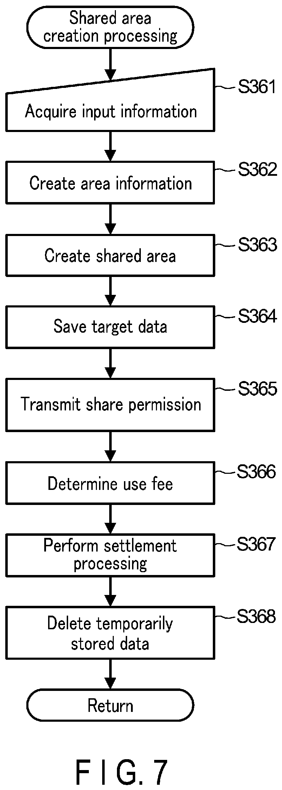

FIG. 7 is a flowchart showing an example of a processing procedure of the shared area creation processing in the above step S36 that is performed by the controller 31 of the data management device 30.

Under the control of the area management processing unit 314, in step S361, the controller 31 first acquires, via the communication I/F 34, the input information which is related to the data file to be shared and is input in the share request operation by the data owner who has agreed to share. The controller 31 stores the acquired input information in the temporary storage 333. The input information includes, for example, the data file 111 to be shared, the sharing time limit, the data user, the use fee, and the like.

Next, in step S362, under the control of the area management processing unit 314, the controller 31 creates area information based on the input information stored in the temporary storage 333, and stores the area information in the area information storage 332. Here, the area information has not included an area location yet.

Then, in step S3 63, under the control of the area management processing unit 314, the controller 31 creates the user shared storage area 221, which is a storage area shared between the sharing source user terminal 10 and the sharing destination user terminal 10, in the shared area 22 of the cloud storage 20. The creation of the user shared storage area 221 can be performed by the controller 31 transmitting an instruction to create the user shared storage area 221 to the cloud storage 20 via the network NW using the communication I/F 34. At this time, the controller 31 adds the area location which is the address information for specifying a storage location of the created user shared storage area 221 to the area information stored in the area information storage 332.

Thereafter, in step S364, under the control of the data write processing unit 315, the controller 31 reads the data file 111, which is data to be shared, from the user dedicated storage area 11 of the sharing source via the network NW using the communication I/F 34. Then, the controller 31 saves the read data file 111 in the user shared storage area 221 which is the sharing destination. That is, first, based on the area information stored in the temporary storage 333, the controller 31 reads out the data file 111, which is data to be shared, from the corresponding user dedicated storage area 11 via the network NW using the communication I/F 34, and stores the data file in the temporary storage 333. Then, the controller 31 specifies the user shared storage area 221 serving as a saving destination based on the area information also, and writes the data file 111 stored in the temporary storage 333 to the corresponding user shared storage area 221 via the network NW using the communication I/F 34.

Thereafter, in step S365, under the control of the area management processing unit 314, the controller 31 transmits a share permission notification to the data user via the network NW using the communication I/F 34. That is, the controller 31 acquires the contact information of the user from the setting information storage 331, and transmits the share permission notification to the contact. The share permission notification can include an area location of the user shared storage area 221.

In step S366, under the control of the area management processing unit 314, the controller 31 determines the use fee to be paid by the data user and the use fee to be acquired by the data owner, based on the use fee in the area information stored in the area information storage 332. Each use fee may be the use fee in the area information. Alternatively, a settlement charge by the data sharing system 1 may be added to the use fee.

In step S367, the controller 31 reads the user information of the data owner and the data user from the setting information storage 331 under the control of the area management processing unit 314. Then, the controller 31 performs settlement processing for the determined use fee based on the settlement method included in each piece of user information. That is, the controller 31 performs a billing process for the data user and performs a deposit process for the data owner. The deposit process may be a reduction of the use fee of the data sharing system 1.

Thereafter, in step S368, under the control of the data write processing unit 315, the controller 31 deletes the temporarily stored information stored in the temporary storage 333 in each processing operation in the shared area creation processing in step S36. Then, the controller 31 ends the processing operation of the shared area creation processing, and proceeds to the processing operation of step S37.

### (4) Shared Area Deletion Processing

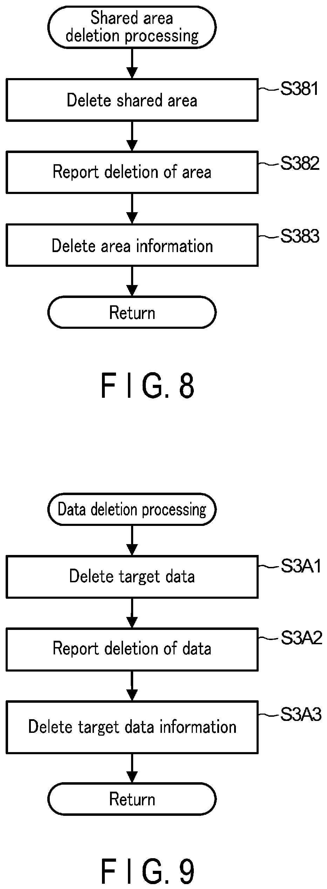

FIG. 8 is a flowchart showing an example of a processing procedure of the shared area deletion processing in the above step S38 that is performed by the controller 31 of the data management device 30.

First, in step S381, under the control of the area management processing unit 314, the controller 31 deletes the user shared storage area 221 for which the sharing time limit has expired via the network NW using the communication I/F 34.

In step S382, under the control of the area management processing unit 314, the controller 31 reports the deletion of the user shared storage area 221 to the user who is the owner of the shared data and the user who is the data user by, for example, email. The controller 31 can acquire, from the setting information storage 331, the contact information of the sharer of the area information stored in the area information storage 332 and corresponding to the deleted user shared storage area 221. In this way, the controller 31 reports the deletion to the user prior to the deletion of the area information related to the deleted user shared storage area 221.

Thereafter, in step S383, under the control of the area management processing unit 314, the controller 31 deletes the area information corresponding to the deleted user shared storage area 221 from the area information storage 332. Then, the controller 31 ends the processing operation of the shared area deletion processing, and proceeds to the processing operation of step S39.

### (5) Data deletion processing

FIG. 9 is a flowchart showing an example of a processing procedure of the data deletion processing in the above step S3A that is performed by the controller 31 of the data management device 30.

First, in step S3A1, under the control of the area management processing unit 314, the controller 31 deletes the processed data 112 for which the publication time limit has expired via the network NW using the communication I/F 34.

Then, in step S3A2, under the control of the area management processing unit 314, the controller 31 reports, for example, by email, the deletion of the published processed data 112 to the user who is the owner of the data file 111 which is the original of the processed data 112. The controller 31 can acquire from the setting information storage 331 the contact information of the owner of the data file 111 corresponding to the deleted processed data 112 stored in the area information storage 332. In this way, the controller 31 performs the deletion report to the user prior to the deletion of the target data information related to the deleted processed data 112.

Thereafter, in step S3A3, under the control of the area management processing unit 314, the controller 31 deletes the target data information corresponding to the deleted processed data 112 from the area information storage 332. Then, the controller 31 ends the processing operation of the data deletion processing, and proceeds to the processing operation of step S31.

### (Working Effects)

As described above, the data management device 30 according to the first embodiment of the present invention is a data management device configured to manage data sharing between a data owner who is a first user and a data user who is a second user. The data management device includes the communication I/F 34 configured to communicate with a user terminal 10 that is a first user terminal operated by the data owner and a user terminal 10 that is a second user terminal operated by the data user, and the controller 31 for controlling the data management device 30. The controller 31 includes the data processing unit 312, the chat management processing unit 313, and the area management processing unit 314 and the data write processing unit 315 as a share processing unit. The data processing unit 312 creates the processed data 112 by processing the data file 111 based on the setting information transmitted from the user terminal 10 of the first user and related to the publication of the data file 111 which is to be shared and which is stored in the user dedicated storage area 11 accessible only by the first user. The data processing unit 312 publishes the created processed data 112. The chat management processing unit 313 causes the user terminal 10 of the first user and the user terminal 10 of the second user to have a chat with each other in response to a request for sharing the data file 111, which is the original data of the processed data 112 and which is transmitted from the user terminal 10 of the second user. When a sharing agreement is acquired between the first user and the second user, the area management processing unit 314 creates the user shared storage area 221 accessible only by the first and second users, and the data write processing unit 315 saves in the user shared storage area 221 a copy of the data file 111 which is data to be shared and which is stored in the user dedicated storage area 11 of the first user. Then, the area management processing unit 314 transmits a share permission notification including the area location of the user shared storage area 221 to the user terminal 10 of the second user, thereby permitting the user terminal 10 of the second user to access the user shared storage area 221.

Therefore, by publishing the processed data 112 obtained by processing the data file 111 which is the data to be shared, the second user who is the data user can easily find desired data and share the data, thereby promoting effective use of the data. In addition, the processed data 112 obtained by processing the actual data is published instead of publishing the actual data of the data file 111, so that effective utilization of the data can be achieved while preventing leakage of the data file 111. Further, by providing a chat environment between the first user who is the data owner and the second user who is the data user, the share negotiation can be easily performed.

Furthermore, in the data management device 30 according to the first embodiment, the area management processing unit 314 of the controller 31 functions as a fee collection processing unit that intermediates between the payment of the use fee from the second user and the deposit of the use fee to the first user when the sharing agreement is acquired between the first user and the second user.

Thus, since a reward is obtained by sharing the data file 111, the data owner actively uses the data sharing system 1, and data distribution can be promoted.

The area management processing unit 314 creates the user shared storage area 221 in response to a share request from the user terminal 10 of the first user who is the data owner.

Therefore, sharing of the data file 111 can be started by determining that the sharing agreement has been acquired through the chat based on the share request from the data owner.

### <Second Embodiment>

Next, a data management device 30 according to a second embodiment of the present invention will be described. In the first embodiment, the data owner inputs information necessary for data sharing after the sharing agreement. In contrast, according to the second embodiment, the data management device 30 automatically acquires information necessary for data sharing by analyzing the contents of a chat that has reached a sharing agreement.

Herein, only parts of the configuration example, operation example, and working effect that differ from those of the above first embodiment will be described, and descriptions of similar parts will be omitted.

### (Configuration Example)

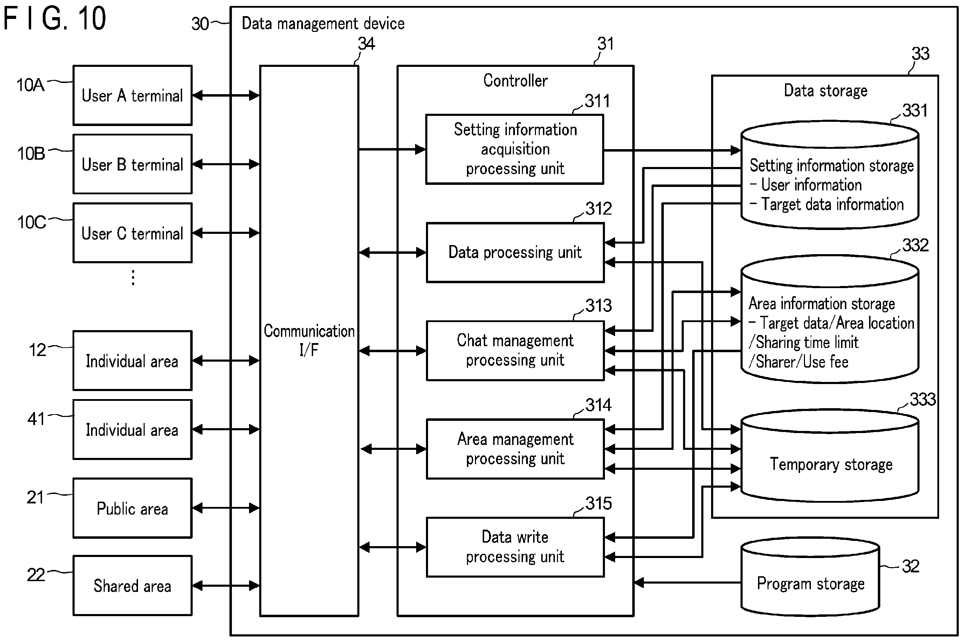

FIG. 10 is a block diagram showing an example of a software configuration of a data management device 30 according to the second embodiment of the present invention.

In the present embodiment, the chat management processing unit 313 in the controller 31 of the data management device 30 reads and analyzes the chat contents stored in the temporary storage 333, acquires information necessary for data sharing, and stores the area information in the area information storage 332.

At this time, since whether or not the sharing agreement is acquired is also acquired from the chat contents, the share request from the data owner is not necessary.

### (Operation Example)

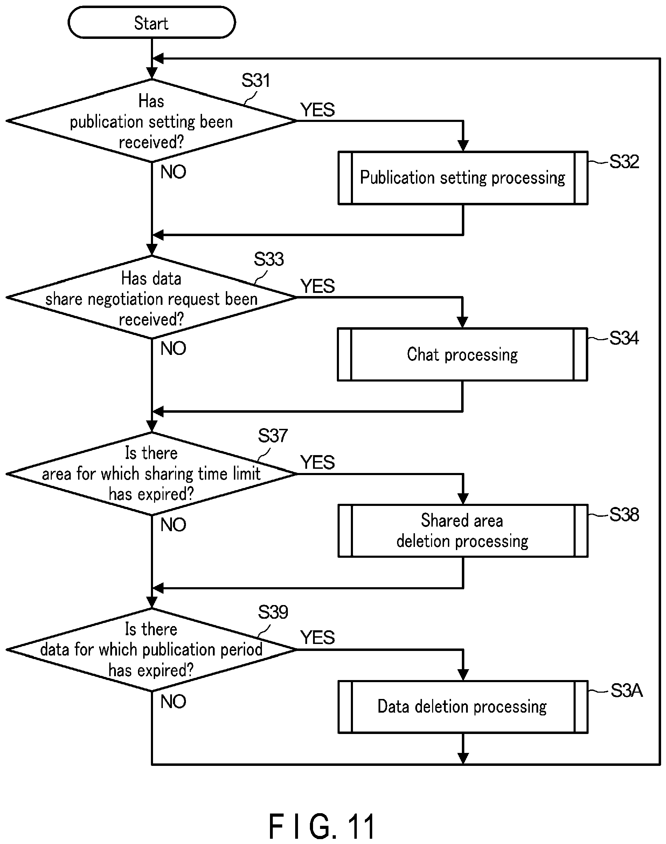

FIG. 11 is a flowchart showing an example of an overall processing procedure of shared area management processing performed by the data management device 30 according to the second embodiment.

If it is determined in step S33 that the data share negotiation request has not been received, the controller 31 determines NO in step S33, and proceeds to the processing operation of step S37 in the present embodiment. If it is determined that the data share negotiation request has been received, the controller 31 determines YES in step S33 and proceeds to the processing operation of step S34. After the processing operation of step S34 is completed, the controller 31 proceeds to the processing operation of step S37 in the present embodiment. That is, the processing operations of step S35 and step S36 in the first embodiment are omitted.

In the chat processing of step S34, the controller 31 performs a chat between the user terminal 10 of the user who has transmitted the data share negotiation request and the user terminal 10 of the data owner. Further, instead of omitting the processing operations of step S35 and step S36 performed in the first embodiment, the controller 31 creates the user shared storage area 221 and writes the data file 111 which is shared data in the user shared storage area 221 under the control of the area management processing unit 314 and the data write processing unit 315.

### (1) Chat processing

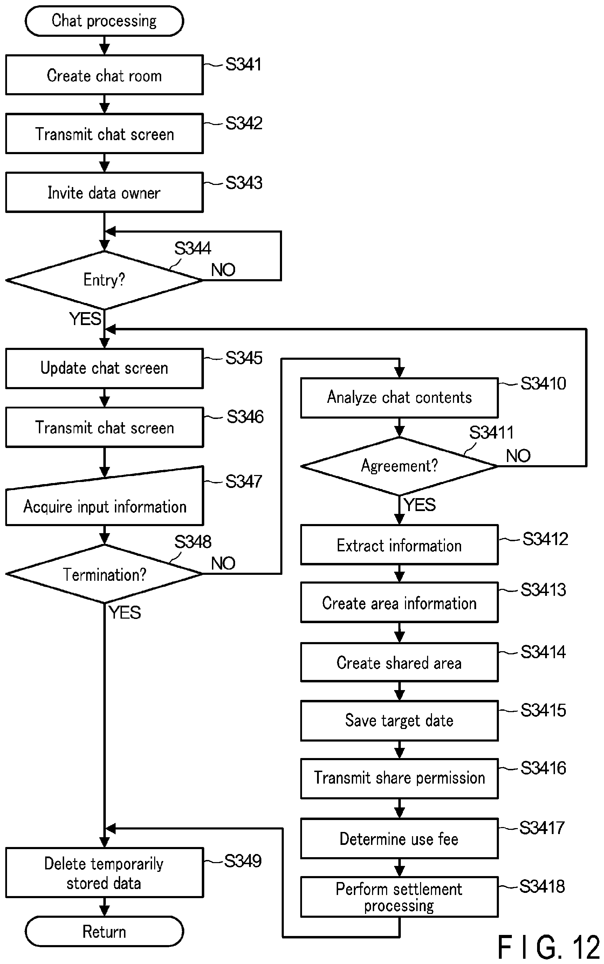

FIG. 12 is a flowchart showing an example of a processing procedure of the chat processing in the above step S34 of this embodiment that is performed by the controller 31 of the data management device 30.

The processing operations from step S341 to step S349 are as described in the first embodiment. However, in the present embodiment, if it is determined in step S348 that the input information is not termination, the controller 31 determines NO in step S348 and proceeds to the processing operation of step S3410 instead of step S345.

In step S3410, under the control of the chat management processing unit 313, the controller 31 analyzes the input information stored in the temporary storage section 333, that is, the contents of the chat. The controller 31 stores the analyzed contents in the temporary storage 333.

Then, in step S3411, under the control of the chat management processing unit 313, the controller 31 determines whether or not the analysis contents stored in the temporary storage section 333 include a word indicating a sharing agreement for the data file 111. In order to facilitate this determination, for example, the user may be notified in advance to input a keyword that should be input when the sharing agreement is obtained. If it is determined that a word indicating the sharing agreement is not included, the controller 31 determines NO in step S3411, and proceeds to the processing operation of step S345. If it is determined that a word indicating the sharing agreement is included, the controller 31 determines YES in step S3411, and proceeds to the processing operation in step S3412.

In step S3412, under the control of the chat management processing unit 313, the controller 31 extracts information on the sharing time limit and the use fee necessary for creating the area information from the analysis contents stored in the temporary storage 333. The controller 31 stores the extracted information in the temporary storage 333. In order to create the area information, information on the target data and the sharer is further required. Information on the data user has already been acquired at the time of receiving the data share negotiation request in step S33. The target data has also been acquired at the time of creating the chat room in step S341.

Then, in step S3413, under the control of the area management processing unit 314, the controller 31 creates area information based on the input information stored in the temporary storage 333 and stores the area information in the area information storage unit 332 in the same manner as in step S362.

Next, in step S3414, under the control of the area management processing unit 314, the controller 31 creates the user shared storage area 221 in the shared area 22 of the cloud storage 20 as in step S363 described above, and adds the area location of the created user shared storage area 221 to the area information stored in the area information storage 332.

Thereafter, in step S3415, under the control of the data write processing unit 315, the controller 31 reads out the data file 111 from the user dedicated storage area 11 of the share source and saves the data file in the user shared storage area 221 in the same manner as in step S364.

In step S3416, under the control of the area management processing unit 314, the controller 31 transmits a share permission notification to the data user in the same manner as in step S365.

In step S3417, under the control of the area management processing unit 314, the controller 31 determines the agreed use fee for sharing the data file 111 based on the use fee in the area information stored in the area information storage unit 332, as in step S366.

Then, in step S3418, under the control of the area management processing unit 314, the controller 31 performs settlement processing for the determined use fee based on the settlement method included in the user information of the data owner and the data user stored in the setting information storage 331, as in step S367 described above. Thereafter, the controller 31 proceeds to the processing operation of step S349.

### (Working Effects)

As described above, in the data management device 30 according to the second embodiment of the present invention, the chat management processing unit 313 analyzes the contents of the chat between the user terminal 10 of the first user who is the data owner and the user terminal 10 of the second user who is the data user to determine whether or not the sharing agreement has been acquired between the first user and the second user. Then, the area management processing unit 314 creates the user shared storage area 221 in response to the determination by the chat management processing unit 313 that the sharing agreement has been acquired, and the data write processing unit 315 stores in the user shared storage area 221 a copy of the data which is to be shared and which is stored in the user dedicated storage area 11.

Therefore, sharing of the data file 111 can be started by automatically determining that the sharing agreement has been acquired from the chat contents. Thus, since a special share request operation by the data owner is not required, the workload of the data owner can be saved.

### <Other Embodiments>

In the first and second embodiments, all the user data is stored in the user shared storage area 221. The data stored in the user shared storage area 221 may not be all the user data. For example, it is possible to create a new file of data different from the original data by cutting out at least part of the data of the data file 111 or processing actual data into an anonymized or abstracted (generalized) format to create processed data. This new data file can be stored as shared data in the user shared storage area 221.

In the first and second embodiments, the user data in the user dedicated storage area 11 is copied to the user shared storage area 221. As described in Non-Patent Literature 2, the user data may be virtually stored by storing a symbolic link to the user data in the user shared storage area 221.

In the first and second embodiments, the user shared storage area 221 is created for each piece of shared data. A plurality of shared data may be stored in one user shared storage area 221. In this case, the deletion of the user shared storage area 221 itself is suspended until all the shared data in the user shared storage area 221 is deleted.

In the first and second embodiments, the processed data 112 in the public area 21 can be viewed only by registered users of the data sharing system 1. The processed data 112 in the public area 21 may be published to users other than the registered users. The data owner may be allowed to designate whether the data is published only to registered users or opened to the general public. When a general user other than the registered user uses the data file 111 that is the original of the processed data, the general user may become a registered user of the data sharing system 1. Alternatively, if the user does not become a registered user, the user may be allowed to use the data file 111 by creating a temporary user shared storage area 221 and paying a use fee higher than that for the registered user.

The order of the processing steps shown in the flowcharts of FIGS. 4 to 9, 11, and 12 is an example, and the present invention is not limited to this order. For example, the order of step S342 and step S343 in FIG. 6 may be reversed. Each processing step may be changed in processing order or the like or may be processed in parallel as long as there is no inconsistency with a preceding or succeeding processing step.

In the second embodiment, the chat contents stored in the temporary storage 333 are deleted in step S349. The chat contents may be separately stored as evidence of the acquisition of the sharing agreement.

Although the embodiments of the present invention have been described in detail in the foregoing, the description is merely an example of the present invention in all of its aspects. Various improvements and modifications can be made without departing from the scope of the present invention. In other words, a specific configuration according to an embodiment may be adopted as appropriate when implementing the present invention.

The present invention should not be limited to the above-described embodiments as-is, but may be embodied by modifying the components without departing from the scope of the invention at the implementation stage. In addition, various inventions may be constituted by appropriately combining a plurality of components disclosed in the embodiments. For example, some components may be omitted from the components shown in the embodiments. Furthermore, the components of different embodiments may be suitably combined.

### REFERENCE SIGNS LIST

- 1: data sharing system
- 10: user terminal
- 10A: user A terminal
- 10B: user B terminal
- 10C: user C terminal
- 11: user dedicated storage area
- 11A: user A dedicated storage area
- 11B: user B dedicated storage area
- 11C: user C dedicated storage area
- 12, 41: individual area
- 20, 40: cloud storage
- 21: public area
- 22: shared area
- 30: data management device
- 31: controller
- 32: program storage
- 33: data storage
- 34: communication interface (communication I/F)
- 35: bus
- 111: data file
- 112: processed data
- 211: processed data storage area
- 221: user shared storage area
- 311: setting information acquisition processing unit
- 312: data processing unit
- 313: chat management processing unit
- 314: area management processing unit
- 315: data write processing unit
- 331: setting information storage
- 332: area information storage
- 333: temporary storage
- NW: network

## Claims

1. A data management device configured to manage data sharing between a first user who is an owner of data and a second user who uses the data, the data management device comprising:
a communication interface configured to communicate with a first user terminal operated by the first user and a second user terminal operated by the second user; and
a controller configured to control the data management device,
the controller including:
a data processing unit configured to process data to be shared to create processed data based on setting information transmitted from the first user terminal and related to publication of the data which is to be shared and which is stored in a dedicated storage area accessible only by the first user, and to publish the created processed data;
a chat management processing unit configured to cause the first user terminal and the second user terminal to have a chat with each other in response to a request for sharing the data to be shared, which is original data of the processed data, the request for sharing being transmitted from the second user terminal; and
a share processing unit configured to create a shared storage area accessible only by the first user and the second user in a case where a sharing agreement is acquired between the first user and the second user, save a copy of the data which is to be shared and which is stored in the dedicated storage area of the first user or a symbolic link to the data to be shared in the shared storage area, and permit the second user terminal to access the shared storage area.

2. The data management device according to claim 1, wherein the controller further includes a fee collection processing unit configured to intermediate payment of a use fee from the second user and deposit of the use fee to the first user in the case where the sharing agreement is acquired between the first user and the second user.

3. The data management device according to claim 1 or 2,
wherein the share processing unit includes:
an area management processing unit configured to create the shared storage area in response to a share request from the first user terminal; and
a data write processing unit configured to store, in the shared storage area, the copy of the data which is to be shared and which is stored in the dedicated storage area or the symbolic link to the data to be shared.

4. The data management device according to claim 1 or 2, wherein
the chat management processing unit is configured to analyze a content of the chat between the first user terminal and the second user terminal to determine whether or not the sharing agreement has been acquired between the first user and the second user, and
the share processing unit includes:
an area management processing unit configured to create the shared storage area in response to a determination by the chat management processing unit that the sharing agreement has been acquired, and
a data write processing unit configured to store, in the shared storage area, the copy of the data which is to be shared and which is stored in the dedicated storage area or the symbolic link to the data to be shared.

5. A data sharing system comprising:
a storage including the dedicated storage area and the shared storage area; and
the data management device according to any one of claims 1 to 4.

6. The data sharing system according to claim 5, wherein the storage includes a first storage device including the dedicated storage area, and a second storage device in which the shared storage area is formed and which is physically different from the first storage device.

7. A data sharing method for sharing data between a first user who is an owner of the data and a second user who uses the data, the method comprising,
by a computer,
processing data to be shared to create processed data based on setting information transmitted from a first user terminal operated by the first user and related to publication of the data which is to be shared and which is stored in a dedicated storage area accessible only by the first user, and publishing the created processed data;
causing the first user terminal and a second user terminal operated by the second user to have a chat with each other in response to a request for sharing the data to be shared, which is original data of the processed data, the request for sharing being transmitted from the second user terminal; and
creating a shared storage area accessible only by the first user and the second user in a case where a sharing agreement is acquired between the first user and the second user, saving a copy of the data which is to be shared and which is stored in the dedicated storage area of the first user or a symbolic link to the data to be shared in the shared storage area, and permitting the second user terminal to access the shared storage area.

8. A data management program for causing a computer to perform processing of each of the processing units included in the data management device according to any one of claims 1 to 4.
